# EUROPÄISCHE PATENTANMELDUNG

(11) **EP 4 826 575 A1**
(43) Veröffentlichungstag der Anmeldung: **21.10.2026**
(21) Anmeldenummer: 25205422.6
(22) Anmeldetag: 29.09.2025
(51) Int. Cl.: G06F 21/10, G06F 21/57, G06F 21/60, G06F 21/74

(54) **VERFAHREN UND SYSTEM ZUR VERTRAULICHEN AUSFÜHRUNG EINES PROGRAMMS IN EINER VERTRAULICHEN UMGEBUNG**

(30) Priorität: 16.04.2025 EP 25171124
(71) Anmelder: Wibu-Systems AG, 76137 Karlsruhe (DE)
(72) Erfinder: Engelmann, Axel, 76137 Karlsruhe (DE); Ruhnau, Nicolai, 76137 Karlsruhe (DE)
(74) Vertreter: Durm Patentanwälte PartG mbB

(57) **Zusammenfassung**

Ein Verfahren zum Schutz eines Programms (500) durch vertrauliche Ausführung des Programms (500) in einer vertraulichen Umgebung (210) einer Prozessoreinheit (200) eines Computers (400) oder Servers (600), umfasst die folgenden Schritte: Bereitstellen einer Prozessoreinheit (200) mit einer vertraulichen Umgebung (210) und mit wenigstens einem vertraulichen Kern (222), der ein sicherer Kern (220) in der vertraulichen Umgebung (210) ist; Bereitstellen eines verschlüsselten Programms (500), das in der vertraulichen Umgebung (210) ausgeführt werden soll; Bereitstellen eines externen Secure-Elements (300), das mit dem Computer (400) verbindbar ist und das einen kryptographischen Schlüssel (530) zur Entschlüsselung des verschlüsselten Programms (500) umfasst; Verbinden des externen Secure-Elements (300) mit dem Computer (400); Übertragung des kryptographischen Schlüssels (530) von dem externen Secure-Element (300) an die Prozessoreinheit (200) in verschlüsselter Form (540); Entschlüsselung des verschlüsselten Programms (500) unter Verwendung des kryptographischen Schlüssels(530); Ausführung des entschlüsselten Programms (500) innerhalb der vertraulichen Umgebung (210) der Prozessoreinheit(200).

## Beschreibung

Die vorliegende Erfindung betrifft ein Verfahren zum Schutz eines Programms mit dem Ziel der vertraulichen Ausführung des Programms in einer vertraulichen Umgebung einer GPU eines Servers, wobei eine GPU mit einem Vertrauensanker zur Verfügung gestellt wird.

Das Gebiet der künstlichen Intelligenz und des maschinellen Lernens hat ein rasantes Wachstum erfahren, wobei Prozessoren oder Prozessoreinheiten (Processing Units, PU, oder Central Processing Units, CPU) und insbesondere Grafikprozessoren (GPUs) für die Ausführung komplexer Rechenmodelle unerlässlich geworden sind. GPUs bieten parallele Verarbeitungsfähigkeiten, die eine effiziente Ausführung von Kl-Modellen ermöglichen, einschließlich Deep-Learning-Netzwerken, Bilderkennungssystemen und Anwendungen zur Verarbeitung natürlicher Sprache. Diese Modelle stellen oft erhebliche Investitionen in geistiges Eigentum ihrer Entwickler dar und erfordern Schutz vor unbefugtem Zugriff oder Kopieren.

Vertrauliche Datenverarbeitung hat sich als Technologieansatz zum Schutz sensibler Daten und Berechnungen in Cloud-Umgebungen entwickelt. Herkömmliche Lösungen für vertrauliche Datenverarbeitung konzentrieren sich hauptsächlich auf den Schutz von Endbenutzerdaten während der Verarbeitung in Rechenzentrumsumgebungen. Diese Lösungen verwenden typischerweise hardwarebasierte Sicherheitsmechanismen, um isolierte Ausführungsumgebungen zu schaffen, in denen sensible Berechnungen durchgeführt werden können, ohne unbefugten Parteien, einschließlich Cloud-Service-Anbietern und Systemadministratoren, ausgesetzt zu sein.

Aktuelle GPU-Schutzmechanismen stehen vor mehreren Einschränkungen, wenn sie auf proprietäre KI-Modelle und Kernel angewendet werden. Bestehende Ansätze für vertrauliche Datenverarbeitung sind hauptsächlich für großangelegte Rechenzentren und öffentliche Cloud-Anbieter konzipiert, mit begrenzter Unterstützung für lokale Bereitstellungsszenarien. Diese Lösungen erfordern oft zentralisierte Infrastruktur und kontinuierliche Netzwerkverbindung, was sie für lokale Ausführungsumgebungen ungeeignet macht, in denen Benutzer möglicherweise offline oder unter isolierten Netzwerkbedingungen arbeiten müssen.

Die Lizenzierung von KI-Modellen stellt zusätzliche Herausforderungen in aktuellen Systemen dar. Herkömmliche Ansätze binden Lizenzierungsmechanismen an spezifische Cloud-Plattformen oder zentralisierte Dienste, was die Flexibilität der Modellbereitstellung in verschiedenen Rechenumgebungen einschränkt. Dies schafft Abhängigkeiten von externer Infrastruktur und verhindert, dass Besitzer von Kl-Modellen oder anderen Modellen ihr Eigentum in verschiedenen Bereitstellungsszenarien anbieten können, einschließlich lokaler Vor-Ort-Installationen.

Bestehende Sicherheitslösungen verfügen auch nicht über die Fähigkeit, eine unabhängige Lizenzverifizierung bereitzustellen, die getrennt von der Ausführungsumgebung funktioniert. Aktuelle Systeme erfordern typischerweise Vertrauen in Plattformanbieter oder zentralisierte Behörden, was möglicherweise nicht mit den Sicherheitsanforderungen von Organisationen übereinstimmt, die ihre proprietären Algorithmen und Datenverarbeitungsmethoden schützen möchten.

Aus dem Stand der Technik ergibt sich das Problem, dass ein verbesserter Schutz bei der Verarbeitung von sensiblen Programmen oder Daten auf Computern oder Servern mit Prozessoren gewünscht ist.

Das Problem wird mit einem Verfahren mit den Merkmalen des Anspruchs 1 und mit einem System mit den Merkmalen des Anspruchs 14 gelöst.

In einem ersten Aspekt wird ein Verfahren zum Schutz eines Programms mit dem Ziel der vertraulichen Ausführung des Programms in einer vertraulichen Umgebung, beispielsweise einer Trusted Execution Environment (TEE), einer Prozessoreinheit (Processing Unit, PU) eines Computers oder Servers bereitgestellt. Das Verfahren umfasst: Bereitstellen einer Prozessoreinheit, PU, mit einer sicheren Umgebung TEE und mit wenigstens einem geschützten Kern (Trusted Execution Core, TEC), der ein Core in der vertraulichen Umgebung (TEE) ist; Bereitstellen eines verschlüsselten Programms, das in der vertraulichen Umgebung TEE ausgeführt werden soll; Bereitstellen eines externen Secure-Elements (ESE), das mit dem Computer verbindbar ist und das einen kryptographischen Schlüssel zur Entschlüsselung des verschlüsselten Programms umfasst; Verbinden des externen Secure-Elements mit dem Computer; Übertragung des kryptographischen Schlüssels von dem externen Secure-Element an die Prozessoreinheit (bevorzugt an den geschützten Kern (TEC) der Prozessoreinheit); Entschlüsselung des verschlüsselten Programms unter Verwendung des kryptographischen Schlüssels; sowie Ausführung des entschlüsselten Programms innerhalb der vertraulichen Umgebung (Trusted Execution Environment TEE) der Prozessoreinheit.

In einem weiteren Aspekt betrifft die vorliegende Erfindung ein System zum Schutz eines Programmes mit dem Ziel der vertraulichen Ausführung des Programms in einer vertraulichen Umgebung einer Prozessoreinheit. Das System umfasst die Prozessoreinheit mit einer vertraulichen Umgebung und mit wenigstens einem vertraulichen Kern, der ein Core oder Kern in der vertraulichen Umgebung ist. Das System umfasst ein externes Secure-Element, das mit einem Computer verbindbar ist. Das System ist derart ausgebildet und konfiguriert, um eine sichere Verbindung zwischen dem externen Secure-Element und der Prozessoreinheit aufzubauen. Es ist weiter konfiguriert zur vertraulichen Übertragung eines Programms, das bevorzugt verschlüsselt ist, eines Modells oder eines Kernels oder anderer Daten an den vertraulichen Kern unter Verwendung der sicheren Verbindung. Das System ist weiter ausgebildet zum Übertragen eines kryptographischen Schlüssels an den vertraulichen Kern von dem externen Secure-Element. Bevorzugt ist der kryptographische Schlüssel in dem externen Secure-Element gespeichert. Das System kann weiter das Programm, das Modell oder den Kernel unter Verwendung des kryptographischen Schlüssels in dem vertraulichen Kern entschlüsseln und das entschlüsselte Programm, Modell oder Kernel innerhalb der vertraulichen Umgebung der Prozessoreinheit ausführen. Die Ausführung und Entschlüsselung erfolgt ohne, dass Dritte von außen in die vertrauliche Umgebung und in den vertraulichen Kern der Prozessoreinheit hineinsehen oder Einfluss auf die Ausführung oder Verschlüsselung nehmen können.

In einem weiteren Aspekt betrifft die vorliegende Erfindung ein externes Secure-Element zur Speicherung eines kryptographischen Schlüssels, das für ein System wie oben beschrieben geeignet ist. Das externe Secure-Element zeichnet sich dadurch aus, dass es dazu ausgebildet ist, den kryptographischen Schlüssel mit einem empfangenen Verschlüsselungsschlüssel zu verschlüsseln und den derart verschlüsselten kryptographischen Schlüssel für eine Übertragung an den vertraulichen Kern der Prozessoreinheit zur Verfügung zu stellen.

In einem weiteren Aspekt betrifft die vorliegende Erfindung eine Prozessoreinheit mit einer vertraulichen Umgebung und mit wenigstens einem vertraulichen Kern, der einen Core in der vertraulichen Umgebung umfasst. Der vertrauliche Kern, die vertrauliche Umgebung können einen Trust Anchor umfassen, der bei der Herstellung der Prozessoreinheit in den Kern oder die Umgebung eingebettet wird und unveränderbar ist und zur Identifizierung oder Authentifizierung des Kerns oder der Umgebung dient.

Bevorzugt umfasst der vertrauliche Kern oder die vertrauliche Umgebung oder ein in den vertraulichen Kern eingebetteter Trust-Anchor proprietäre Programme, Modelle oder KI-Modelle, Kerne oder kryptographische Schlüssel, die durch den Hersteller der Prozessoreinheit vorab geladen und/oder implementiert werden, sodass der Hersteller Lizenzbedingungen für die Programme, Modelle, Kerne oder kryptographischen Schlüssel direkt kontrollieren kann.

Das Verfahren ermöglicht die sichere Ausführung von Modellen, einschließlich proprietärer KI-Modelle, und/oder Kernel oder GPU-Kernel sowohl auf lokalen Computern als auch in Cloud- oder sonstigen Server-Umgebungen mit Servern, während gleichzeitig das Programm, Modell und/oder der Kernel und damit das Eigentum der Besitzer der Modelle geschützt wird. Eine unbefugte Manipulation oder Ausführung von Programm, Modell und/oder Kernel wird so zuverlässig verhindert. Die Trennung zwischen dem externen Secure-Element und der Prozessoreinheit, PU, oder einer CPU oder GPU als Ausführungsumgebung bietet zudem eine unabhängige Lizenzverifizierung, die nicht auf zentralisierte Infrastruktur angewiesen ist.

Der Ablauf des Verfahrens beginnt mit der Bereitstellung der erforderlichen Komponenten und dem Aufbau einer bevorzugt sicheren Verbindung zwischen ihnen. Die sichere Verbindung kann eine verschlüsselte Verbindung sein.

Desweiteren wird ein verschlüsseltes Programm oder Daten bereitgestellt, das in der vertraulichen Umgebung ausgeführt werden soll. Es wird an die vertrauliche Umgebung der Prozessoreinheit übertragen. Die Übertragung an den vertraulichen und meistens bevorzugt gesicherten Bereich (Umgebung) kann ebenfalls verschlüsselt erfolgen. Eine besondere Sicherung der Verbindung ist aber nicht notwendig, insbesondere wenn das Programm von einer Speichereinheit an den Prozessor innerhalb eines Computers übertragen wird.

Der kryptographische Schlüssel für die Entschlüsselung von Programm, Modell oder Kernel oder auch Daten wird, bevorzugt erst nach erfolgreicher Lizenzprüfung durch das externe Secure-Element, von dem externen Secure-Element an den Prozessor oder die Prozessoreinheit bzw. den sicheren Kern (TEC) oder an die vertrauliche, sichere Umgebung, bevorzugt zu einem späteren Zeitpunkt, übermittelt. Die Übermittlung erfolgt unabhängig von der Übermittlung des Programms. Erst nach der Entschlüsselung kann das Programm bzw. Modell in der vertraulichen Umgebung der Prozessoreinheit ausgeführt werden, ohne dass unbefugte Dritte Zugriff auf das geschützte Modell, den Kernel, darin umfasste Daten oder das darin enthaltene geistige Eigentum erhalten.

Zu den Vorteilen zählen die erhöhte Sicherheit durch die Speicherung des kryptographischen Schlüssels in dem externen Secure-Element und somit unabhängig und getrennt von dem Computer oder der Prozessoreinheit. Weitere Vorteile betreffen die Flexibilität bei der Bereitstellung in verschiedenen Umgebungen, die Unabhängigkeit von zentraler Infrastruktur sowie die Möglichkeit zur Offline-Ausführung. Die Sicherheit kann auch durch den Einsatz eines hardwarebasierten Vertrauensankers, Trust Anchor, weiter gesteigert werden. Das Verfahren ist entsprechend flexibel.

Typische Einsatzszenarien des erfindungsgemäßen Verfahrens umfassen den Schutz proprietärer KI-Modelle in medizinischen Anwendungen, wo sensible Patientendaten verarbeitet werden, die sichere Ausführung von Finanzmodellen in regulierten Umgebungen, den Einsatz in industriellen Steuerungssystemen mit hohen Sicherheitsanforderungen sowie die Bereitstellung von KI-Diensten in Edge-Computing-Szenarien ohne permanente Netzwerkverbindung.

In einer bevorzugten Ausgestaltung umfasst das Programm ein oder mehrere Modelle oder KI-Modelle, Kernel oder GPU-Kernel oder sensible Daten, beispielsweise für derartige Modelle.

In einer bevorzugten Ausführungsform des Verfahrens kann vorgesehen sein, dass die Übertragung zwischen dem externen Secure-Element und der Prozessoreinheit auf einer sicheren Verbindung beruht und der Aufbau der sicheren Verbindung auf Verschlüsselungsschlüsseln basiert, vorzugsweise auf zertifizierten Schlüsseln, besonders bevorzugt auf Schlüsseln, die in beiden Instanzen (Computer des Benutzers und Secure-Element und/oder Prozessoreinheit des ausführenden Computers oder eines ausführenden Servers) bereitgestellt sind. Dies bietet den Vorteil einer erhöhten Sicherheit durch gegenseitige Authentifizierung, wodurch, beispielsweise bei einer Prozessoreinheit in einem externen Server, Man-in-the-Middle-Angriffe effektiv verhindert werden können.

Die Verwendung zertifizierter Schlüssel, die in beiden Instanzen bereitgestellt sind, gewährleistet eine starke kryptographische Authentifizierung zwischen der vertraulichen Umgebung der PU oder GPU und dem externen Secure-Element, wodurch das Risiko von Angriffen reduziert und die Integrität der sicheren Verbindung sichergestellt wird. Ein zusätzlicher Vorteil besteht darin, dass keine zentrale Zertifizierungsstelle für die laufende Kommunikation erforderlich ist, was die Systemunabhängigkeit erhöht.

In einer bevorzugten Ausführungsform des Verfahrens werden als weitere Schritte ausgeführt das Sichern des kryptographischen Schlüssels mittels Sicherungsdaten. In einem weiteren Schritt erfolgt bevorzugt das Übermitteln des gesicherten kryptographischen Schlüssels an das externe Secure-Element. Ein anderer Schritt betrifft das zur Verfügung stellen der Sicherungsdaten an das externe Secure-Element. Im weiteren Schritt werden die gesicherten kryptographischen Schlüssel durch das externe Secure-Element bei Bedarf entsichert, wobei die Sicherungsdaten bevorzugt auf Lizenzdaten oder Lizenzinformationen von einem Rechteinhaber des Programms basieren. Dies hat den Vorteil, dass man vor Übermittlung des kryptographischen Schlüssels an den vertraulichen Kern eine Berechtigung anhand von Lizenzdaten oder Lizenzinformationen erfolgen kann. Die Sicherungsdaten, die einen oder mehrere Lizenzschlüssel oder Lizenzinformationen enthalten können, werden von dem Rechteinhaber zur Verfügung gestellt und in der Regel in dem externen Secure-Element gespeichert. Der vertrauliche Kern stellt die Anfrage an das externe Secure-Element zur Übermittlung des Schlüssels anhand des Lizenz-Agreements in dem externen Secure-Element.

Das Entsichern des gesicherten kryptographischen Schlüssels kann ein Entschlüsseln des kryptographischen Schlüssels umfassen. Der kryptographische Schlüssel wird dann von dem Secure-Element an den vertraulichen Kern übermittelt, wobei die Übermittlung über einen gesicherten Übermittlungskanal oder verschlüsselt, beispielsweise mit einem öffentlichen Schlüssel des vertraulichen Kerns, erfolgen kann.

Auf diese Weise ist es möglich, die kryptografischen Schlüssel in dem externen Secure-Element zu sichern, so dass sie nicht ohne weiteres verwendet werden können. Eine Entsicherung oder Entschlüsselung ist nur mit den Sicherungsdaten möglich, die ebenfalls in dem Secure-Element gespeichert sein können. Hierbei kann innerhalb des Secure-Elements eine Trennung von kryptografischen Schlüsseln und Sicherungsdaten erfolgen. Die Begriffe sichern und entsichern sind damit synonym mit verschlüsseln und entschlüsseln mittels der Sicherungsdaten zu verstehen.

In der bevorzugten Ausführungsform erfolgt die Übertragung des kryptographischen Schlüssels an den vertraulichen Kern nach einer Lizenzprüfung, die durch das externe Secure-Element erfolgt. Diese Lizenzprüfung kann, wie oben beschrieben, auf den Lizenzdaten oder Lizenzinformationen von dem Rechteinhaber beruhen.

In einer bevorzugten Ausgestaltung des Verfahrens kann Schlüsselmaterial für die Verschlüsselung und Entschlüsselung von Benutzerdaten, Lizenzen, Lizenzdaten oder anderer Daten für eine Lizenzprüfung durch das externe Secure-Element bereitgestellt werden. Bevorzugt kann das Schlüsselmaterial auch den kryptographischen Schlüssel selbst umfassen. Darüber hinaus kann das Schlüsselmaterial andere Verschlüsselungsschlüssel aufweisen, die beispielsweise Schlüssel eines asymmetrischen Schlüsselpaares sind.

Vorzugsweise erfolgt die Lizenzierung eines Programms, Modells oder Kernels und/oder der Schutz der gleichen, unabhängig von zentralen Strukturen und unabhängig von der Ausführung in einer lokalen Umgebung oder in einer öffentlichen Cloud und/oder unabhängig von öffentlicher Infrastruktur. Dies ermöglicht eine Offline-Ausführung oder eine Standalone-Ausführung.

Das bevorzugte Verfahren ist derart gestaltet, dass die Ausführung eines verschlüsselten Programms in einem Computer Standalone erfolgen kann, solange der kryptographische Schlüssel in einem externen Secure-Element vorhanden ist, der an den Computer angeschlossen werden kann. Auf diese Weise ist es möglich, eine geschützte Ausführung eines Programms durchzuführen, ohne auf das Vertrauen auf Dritte angewiesen zu sein.

In einer bevorzugten Ausführungsform kann das Verfahren weitere Schritte umfassen und dazu ausgebildet sein, auch eine Prozessoreinheit in einem externen Server zu verwenden, der von dem Computer getrennt ist, bevorzugt räumlich getrennt. Die verwendete Prozessoreinheit zur Ausführung des geschützten und verschlüsselten Programms ist Teil eines Servers, der bevorzugt in der Cloud angeordnet ist. Das externe Secure-Element wird mit dem Computer verbunden und kann die Beauftragung und Initiierung der Ausführung des Programms starten. Der Computer übermittelt in einem weiteren Schritt das verschlüsselte Programm an den Server. Dies erfolgt bevorzugt über eine sichere Verbindung, beispielsweise über eine TLS-Verbindung. Sobald das verschlüsselte Programm von dem Computer an den Server gelangt ist oder schon dort vorhanden ist, kann der Computer die Initiierung der Ausführung des Programms in den vertraulichen Kern der Prozessoreinheit des Servers initiieren. Der vertrauliche Kern kann ein Teil einer CPU oder GPU des Servers sein. Auf diese Weise lässt sich eine höhere Rechenkapazität oder eine höhere Parallelisierung in einem Serverrechner verwenden.

In einer weiter bevorzugten Ausführungsform des Verfahrens umfasst ein zusätzlicher Schritt das Initiieren eines Entschlüsselungsprozesses des Programms, Modells oder Kernels, bevorzugt durch einen Nutzer des Computers oder durch den Computer. Ein weiterer Schritt umfasst das Zur-Verfügung-Stellen eines Verschlüsselungsschlüsselpaares mit öffentlichem Verschlüsselungsschlüssel und privatem Verschlüsselungsschlüssel. Bevorzugt wird das Verschlüsselungsschlüsselpaar in dem vertraulichen Kern oder in einem Vertrauens-Anker oder Trust- Anchor in dem vertraulichen Kern zur Verfügung gestellt. Auf diese Weise hat der vertrauliche Kern Zugriff auf beide Schlüssel des Schlüsselpaares.

Ein weiterer Schritt umfasst bevorzugt das Anfordern des öffentlichen Verschlüsselungsschlüssels der Prozessoreinheit. Bevorzugt erfolgt die Anforderung eines zertifizierten öffentlichen Verschlüsselungsschlüssels, der besonders bevorzugt in einem Trust-Anchor abgelegt ist.

Optional kann auch hier ein Nonce, also eine Number-Used-Only-Once verwendet werden. Nach der Anforderung und einer optionalen entsprechenden Überprüfung erfolgt ein Übermitteln des öffentlichen Verschlüsselungsschlüssels und des optionalen Nonce von der Prozessoreinheit an das externe Secure-Element.

Ein weiterer Schritt betrifft das Feststellen des Vorhandenseins der optionalen Nonce und das Validieren des öffentlichen Verschlüsselungsschlüssels, bevorzugt gegen ein vertrauenswürdiges Stammzertifikat. Dies erfolgt vorzugsweise in dem externen Secure-Element. **In** einem weiteren Verfahrensschritt wird der kryptografische Schlüssel, der zu diesem Zeitpunkt bevorzugt unverschlüsselt ist, mit dem öffentlichen Verschlüsselungsschlüssel der Prozessoreinheit verschlüsselt. Ein weiterer Schritt sieht das Übermitteln des verschlüsselten kryptografischen Schlüssels und gegebenenfalls optional weiterer Lizenzinformationen von dem externen Secure-Element an die Prozessoreinheit vor.

Ein weiterer bevorzugter Schritt umfasst das Empfangen und Entschlüsseln des verschlüsselten kryptografischen Schlüssels in der Prozessoreinheit. Bevorzugt erfolgt dies im vertraulichen Kern der Prozessoreinheit, besonders bevorzugt in einem Trust Anchor der Prozessoreinheit bzw. des vertraulichen Kerns. Die Entschlüsselung des verschlüsselten kryptografischen Schlüssels erfolgt mit dem privaten Verschlüsselungsschlüssel des öffentlichen Schlüssels. Der private Verschlüsselungsschlüssel ist der korrespondierende Teil des Verschlüsselungsschlüsselpaares.

Auf diese Weise kann eine gesicherte Übertragung des kryptografischen Schlüssels zur Entschlüsselung des Programms zwischen dem Secure-Element und der Verarbeitungseinheit bzw. der Prozessoreinheit erfolgen. Dies ist insbesondere dann wichtig, wenn die Prozessoreinheit an einem externen Server genutzt wird.

Eine weitere bevorzugte Ausführungsform des Verfahrens sieht vor, dass neben dem kryptografischen Schlüssel auch Lizenzinformationen des Programms oder Modells oder Kernels an das externe Secure-Element zur Verfügung gestellt werden. Auf diese Weise kann eine in dem externen Secure-Element konzentrierte und zentralisierte Speicherung und Bearbeitung bzw. ein entsprechendes Handling des kryptografischen Schlüssels erfolgen.

Das Verfahren kann auch bevorzugt umfassen, dass die verwendeten Verschlüsselungsschlüssel zertifizierte Schlüssel sind, die an beiden Orten hinterlegt sind, vorzugsweise auf der Prozessoreinheit (etwa CPU oder GPU), vorzugsweise in einem Trust Anchor, und auf dem externen Secure-Element und/oder dem Computer, hier bevorzugt nur der öffentliche Schlüssel des Verschlüsselungsschlüsselpaares. Ein zusätzlicher Vorteil ist die erhöhte Ausfallsicherheit, da die Schlüssel redundant gespeichert werden und somit auch bei teilweisem Systemausfall die Authentifizierung gewährleistet bleibt.

Diese bidirektionale Schlüsselhinterlegung schafft eine gegenseitige Authentifizierung zwischen den Komponenten, wodurch sowohl der vertrauliche Kern, die vertrauliche Umgebung der Prozessoreinheit als auch das externe Secure-Element ihre jeweilige Identität verifizieren können, bevor sensible Operationen durchgeführt werden. Dies kann jedenfalls im Falle des vertraulichen Kerns oder der vertraulichen Umgebung durch die Verwendung eines Trust Anchors erfolgen. Ein zusätzlicher Vorteil ist die Verhinderung von Spoofing-Angriffen, bei denen ein Angreifer versucht, sich als legitime Komponente auszugeben.

Das Verfahren kann ferner umfassen, dass ein Modell, ein KI-Modell oder ein Kernel vom Computer oder externen Secure-Element zur GPU übertragen wird, wobei das Programm, Modell oder der Kernel verschlüsselt sind. Ein zusätzlicher Vorteil besteht in der Möglichkeit, verschiedene Verschlüsselungsalgorithmen je nach Sicherheitsanforderungen und Rechenleistung flexibel einzusetzen.

Gemäß einer weiter bevorzugten Ausgestaltung des Verfahrens wird der kryptographische Schlüssel dem Secure-Element zur Verfügung gestellt. Optional können zusätzlich Lizenzformationen des Programms, Modells und/oder des Kernels zur Verfügung gestellt werden.

**In** einer bevorzugten Ausgestaltung des Verfahrens erfolgt die Übertragung des kryptographischen Schlüssels an die Prozessoreinheit nach einer Lizenzprüfung, vorzugsweise durch das externe Secure-Element. Dies bietet die Möglichkeit, verschiedene Lizenzmodelle wie zeitbasierte, nutzungsbasierte oder funktionsbasierte Lizenzen zu implementieren, ohne die Kernarchitektur zu ändern.

Die Lizenzprüfung vor der Schlüsselübertragung ermöglicht eine genaue Kontrolle über die Programm- oder Modellnutzung und stellt sicher, dass nur autorisierte Benutzer mit gültigen Lizenzen Zugriff auf die proprietären Modelle erhalten, wodurch eine effektive Monetarisierung und Rechteverwaltung ermöglicht wird. Ein zusätzlicher Vorteil ist die Möglichkeit, Nutzungsstatistiken zu sammeln, ohne sensible Modelldaten preiszugeben.

Bevorzugt wird Schlüsselmaterial für die Verschlüsselung und Entschlüsselung von Benutzerdaten oder Daten durch das externe Secure-Element bereitgestellt. Ein Vorteil ist die klare Trennung von Verantwortlichkeiten, wodurch das Prinzip der minimalen Berechtigungen umgesetzt und das Risiko von Insider-Angriffen reduziert wird. Die Bereitstellung von Schlüsselmaterial für Benutzerdaten durch das externe Secure-Element erweitert den Schutz über die Modelle hinaus auf die verarbeiteten Daten selbst, wodurch eine Ende-zu-Ende-Vertraulichkeit gewährleistet und sensible Informationen vor unbefugtem Zugriff geschützt werden.

Das Verfahren kann auch umfassen, dass die Lizenzierung des Modells und/oder Kernels und/oder der Schutz unabhängig von zentralen Strukturen und unabhängig von der Ausführung in einer lokalen Umgebung oder in einer öffentlichen Cloud erfolgt. Ein Vorteil ist die verbesserte Widerstandsfähigkeit gegen Denial-of-Service-Angriffe auf zentrale Lizenzierungsserver.

Diese Unabhängigkeit von zentralen Strukturen ermöglicht eine flexible Bereitstellung von Kl-Modellen oder Modellen in verschiedenen Umgebungen, ohne dass eine kontinuierliche Verbindung zu zentralisierten Lizenzservern erforderlich ist, wodurch die Systemzuverlässigkeit erhöht werden. Ein zusätzlicher Vorteil ist die Möglichkeit, in Umgebungen mit strengen Datenlokalisierungsanforderungen zu operieren, ohne externe Abhängigkeiten.

Eine Offline-Ausführung des Verfahrens ermöglicht die Einsetzbarkeit in kritischen Infrastrukturen oder Notfallszenarien, wo Netzwerkverbindungen unzuverlässig oder nicht verfügbar sein könnten. Die Offline-Ausführungsfähigkeit erweitert die Anwendbarkeit des Systems auf isolierte oder sicherheitskritische Umgebungen, in denen Netzwerkverbindungen möglicherweise nicht verfügbar oder unerwünscht sind, wodurch die Vielseitigkeit und Sicherheit der Lösung erhöht werden.

In einer bevorzugten Ausführungsform des Verfahrens erfolgt ein Aufbau einer sicheren Verbindung zwischen dem externen Secure-Element und dem vertraulichen Kern und/oder dem Trust Anchor. Somit ist es möglich, fortschrittliche kryptographische Protokolle wie Post-Quantum-Kryptographie zu implementieren, um zukünftige Sicherheitsbedrohungen zu adressieren.

Der direkte Aufbau einer sicheren Verbindung zwischen dem externen Secure-Element und dem vertraulichen Kern und/oder Trust Anchor minimiert die Angriffsfläche, indem Zwischenkomponenten umgangen werden. Eine sichere Ende-zu-Ende-Kommunikation für kritische Sicherheitsoperationen wird gewährleistet. Die Latenz verringert sich bei sicherheitskritischen Operationen durch Eliminierung von Zwischenschritten in der Kommunikation.

In einer bevorzugten Ausführungsform des Verfahrens wird ein Protokoll zur Kommunikation zwischen dem externen Secure-Element und dem vertraulichen Kern bevorzugt mit oder ohne Nonce verwendet. Ein Nonce erhöht die Sicherheit der Kommunikation, die in jede Kommunikationssitzung zwischen dem Trust Anchor und dem externen Secure-Element eingebettet wird, um die Eindeutigkeit jeder Nachricht zu gewährleisten. Beispielsweise kann bei jeder Authentifizierungsanfrage eine neue 128-Bit-Zufallszahl generiert und in die Nachricht integriert werden, wodurch sichergestellt wird, dass selbst identische Anfragen unterschiedliche kryptographische Signaturen erzeugen. Ein wesentlicher Vorteil der Nonce-Verwendung ist der effektive Schutz vor Replay-Angriffen, bei denen ein Angreifer zuvor abgefangene Nachrichten erneut senden könnte, um unbefugten Zugriff zu erlangen.

Verbindbar und verbunden mit einem Computer bedeutet in diesem Zusammenhang, dass eine Kommunikationsverbindung der Art besteht, dass Daten zwischen den beiden Komponenten ausgetauscht werden können.

Dieses System bietet eine integrierte Hardware- und Software-Lösung für den Schutz von Modellen, bevorzugt proprietärer Kl-Modelle, die eine nahtlose Bereitstellung in verschiedenen Computing-Umgebungen ermöglicht und gleichzeitig starke Sicherheitsgarantien durch die Kombination von Trusted Execution Core (TEC), Trust Anchor und externem Secure-Element bietet.

Der Trust Anchor dient dabei als hardwarebasierter Vertrauensanker innerhalb der GPU, der in der vertraulichen Umgebung oder dem Trusted Execution Core ermöglicht, kryptographische Operationen in einer isolierten Umgebung authentifiziert durchzuführen, während das externe Secure-Element als unabhängige Vertrauensinstanz für die Lizenzvalidierung und Schlüsselverwaltung dient. Die Kommunikation zwischen diesen Komponenten erfolgt über verschlüsselte Kanäle mit gegenseitiger Authentifizierung, wodurch ein mehrschichtiges Sicherheitskonzept realisiert wird. Ein besonderer Vorteil dieses Systems ist die Möglichkeit zur flexiblen Anpassung an unterschiedliche Einsatzszenarien, sei es in lokalen Umgebungen, Edge-Computing-Anwendungen oder Cloud-Infrastrukturen, ohne dabei Kompromisse bei der Sicherheit einzugehen.

Bevorzugt ist der Trust Anchor des Systems ein hardwarebasierter Vertrauensanker, der in die Prozessoreinheit, CPU oder GPU eingebettet ist. Der Trust Anchor ist bevorzugt als physische Hardwarekomponente innerhalb der GPU-Architektur ausgeführt, die als Wurzel des Vertrauens dient. Ein wesentlicher Vorteil dieser Implementierung ist die erhöhte Sicherheit durch physische Isolation, die Manipulationsversuche erheblich erschwert.

Die hardwarebasierte Implementierung des Trust Anchors bietet einen manipulationssicheren Vertrauensanker, der gegen Software-basierte Angriffe resistent ist und eine sichere Grundlage für kryptographische Operationen innerhalb der Prozessoreinheit oder der GPU schafft.

In einer bevorzugten Ausgestaltung des Systems ist das externe Secure-Element ein manipulationssicheres Hardware-Gerät oder -Modul, das physisch von der GPU getrennt ist und zur sicheren Speicherung kryptographischer Schlüssel und zur Durchsetzung von Lizenzbedingungen ausgelegt ist.

Die physische Trennung des externen Secure-Elements von der Prozessoreinheit oder GPU schafft eine zusätzliche Sicherheitsebene durch Isolation kritischer Sicherheitsfunktionen und ermöglicht eine klare Trennung der Verantwortlichkeiten und eine unabhängige Kontrolle über Lizenzierung und Schlüsselverwaltung, wodurch das Vertrauen in das Gesamtsystem erhöht wird.

Eine bevorzugte Ausführungsform des erfindungsgemäßen Systems sieht vor, dass die Prozessoreinheit einen Trust Anchor oder Vertrauensanker umfasst, der bevorzugt ein eindeutiger, hardwarebasierter Vertrauensanker ist, welcher in die Prozessoreinheit bei der Herstellung der Prozessoreinheit eingebettet ist.

Bevorzugt ist der Trust Anchor in einem Kern, besonders bevorzugt in dem vertraulichen Kern der Prozessoreinheit eingebettet. Auf diese Weise ist es möglich, dass sich der vertrauliche Kern bzw. die Prozessoreinheit gegenüber anderen Komponenten oder Instanzen ausweisen kann, sodass beispielsweise die Ausführung von Programmen auf vorbestimmte Prozessoreinheiten oder vertrauliche Kerne beschränkt sein kann. Einige oder alle Kerne der Prozessoreinheit, der CPU oder GPU können einen Trust Anchor aufweisen.

In einer bevorzugten Ausführungsform des Systems ist das externe Secure-Element ein manipulationssicheres Hardwaregerät oder -modul, das physisch von der Prozessoreinheit getrennt und zur sicheren Speicherung kryptographischer Schlüssel ausgelegt ist. Bevorzugt ist das externe Secure-Element auch zur Durchsetzung von Lizenzbedingungen ausgelegt. Vorzugsweise kann das Secure-Element selbst einen Prozessor umfassen, um bestimmte Aufgaben auszuführen, beispielsweise eine Entschlüsselung oder Verschlüsselung von Informationen oder z.B. des kryptographischen Schlüssels.

In einer bevorzugten Ausführungsform des Systems ist das externe Secure-Element lokal mit einem Computer verbunden, während die Ausführung des Programms, die Lizenzierung und/oder der Schutz des Programms in einer Prozessoreinheit eines externen Servers und/oder in einer öffentlichen Cloud oder einem Server einer öffentlichen Cloud durchgeführt wird. Dies ermöglicht eine lokale Rechteverwaltung und Speicherung des notwendigen kryptografischen Schlüssels bei einer Remote-Ausführung eines geschützten, lizensierten oder verschlüsselten Programms, Modells, Kl-Modells oder Kernels.

Das System, bei dem das externe Secure-Element lokal mit einem Computer verbunden ist, erlaubt eine Lizenzierung und/oder einen Schutz oder eine gesicherte Ausführung eines Programms in einer vertraulichen Umgebung in einer öffentlichen Cloud oder einem externen Remote-Server. Bei dieser Konfiguration ist bevorzugt das manipulationssichere externe Sicherheitselement (Secure-Element) physisch vor Ort installiert und kommuniziert direkt mit dem lokalen Computer, während gleichzeitig die Möglichkeit besteht, Lizenzvalidierung und Schutzmaßnahmen über Cloud-Dienste abzuwickeln. Die hohe Flexibilität bei der Implementierung von Sicherheitsrichtlinien ermöglicht es Unternehmen, sensible Schlüsselkomponenten unter ihrer direkten Kontrolle zu behalten, während eine Skalierbarkeit und Verfügbarkeit von Cloud-basierten Lizenzierungsdiensten nutzbar ist.

Die hybride Architektur sichert den Benutzern zu, die Kontrolle über ihre Lizenzierungsinfrastruktur zu behalten, während sie gleichzeitig die Skalierbarkeit und Rechenleistung öffentlicher Cloud-Dienste nutzen können, wodurch eine optimale Balance zwischen Sicherheit und Leistung erreicht wird. Die Kombination aus lokaler Sicherheitskomponente und Cloud-basierter Lizenzierung und Rechenleistung schafft ein duales Sicherheitskonzept, das die Vorteile beider Welten vereint. Der externe Server oder Rechner in der Cloud muss lediglich eine Prozessoreinheit mit einer vertraulichen Umgebung aufweisen, in der das Programm vertraulich und ohne Zugriff Dritter entschlüsselt und ausgeführt werden kann.

Das System kann ferner umfassen, dass das System zur dynamischen Auswahl des Standorts der Berechnung basierend auf Anforderungen für Leistung und Vertraulichkeit konfiguriert ist. Diese intelligente Funktionalität des Systems ermöglicht es, automatisch zu entscheiden, wo bestimmte Berechnungen durchgeführt werden sollen - sei es lokal auf der Prozessoreinheit oder GPU, auf dem Server oder in der Cloud - je nachdem, welche Anforderungen an Rechenleistung und Datenschutz im jeweiligen Anwendungsfall bestehen. Das System kann beispielsweise besonders vertrauliche Berechnungen lokal ausführen, während rechenintensive, aber weniger sensible Aufgaben in die Cloud ausgelagert werden können. Die adaptive Standortauswahl erlaubt die Optimierung der Ressourcennutzung bei gleichzeitiger Einhaltung von Datenschutz- und Sicherheitsrichtlinien und erhöht die Gesamteffizienz des Systems.

Die Erfindung wird nachfolgend anhand der beigefügten Zeichnungen näher erläutert. Es zeigen:
- Figur 1: ein System mit einem Computer und externen Secure Element;
- Figur 2: ein System umfassend einen Computer, ein externes Secure-Element und mit einem Server mit einer vertraulichen Umgebung einer Prozessoreinheit;
- Figur 3: eine schematische Darstellung des erfindungsgemäßen Verfahrens zum Schutz eines Programms mit einem externen Secure Element;
- Figur 4: ein Teil-Verfahren mit vorbereitenden Schritten um eine vertrauliche Ausführung eines Programms zu ermöglichen;
- Figur 5: eine schematische Darstellung des Ablaufs einer Ausführungsform eines Verfahrens zum vertraulichen Ausführen eines Programms.

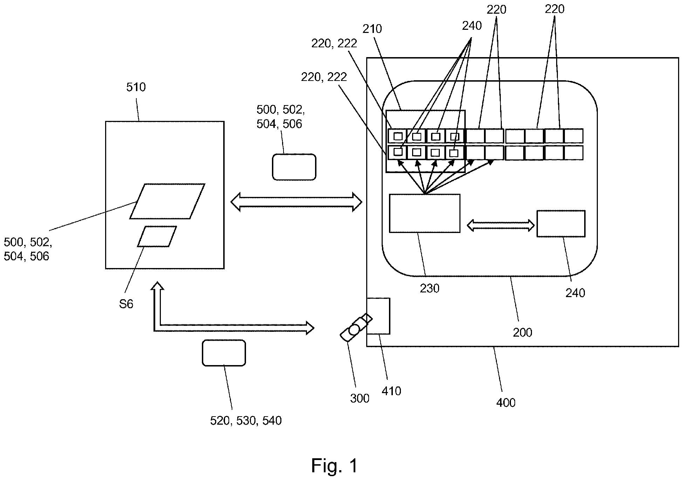

Figur 1 zeigt ein System 100 mit einer Prozessoreinheit 200 mit einer vertraulichen Umgebung 210 mit wenigstens einem Kern 220 in der vertraulichen Umgebung 210. Das System umfasst daneben ein externes Secure-Element 300 das mit einem Computer 400 verbindbar ist.

In der hier gezeigten Ausführungsform umfasst die Prozessoreinheit 200 einen Controller 230 und einen optionalen Vertrauensanker, der als Trust Anchor 240 bezeichnet wird. Der Trust Anchor 240 ist eine unveränderliche, hardwarebasierte Information, eine Vertrauensbasis, die bevorzugt in das Silizium des Kerns 220 eingebettet ist.

Die Prozessoreinheit 200 ist in der hier gezeigten Ausführungsform Teil des Computers 400, an den das externe Secure-Element 300 angeschlossen ist. Dies erfolgt über eine Schnittstelle 410, die eine drahtgebundene oder drahtlose Verbindung zwischen externem Secure-Element 300 und Computer 400 herstellt. Die Schnittstelle 410 kann beispielsweise ein USB-Port sein oder eine drahtlose Bluetooth-Schnittstelle.

Die Prozessoreinheit 200 hat in der hier gezeigten Ausführung weitere vertrauliche Kerne 222, die in der vertraulichen Umgebung 210 angeordnet sind. Zusätzlich zu diesen vertraulichen Kernen 222 existieren weitere Kerne 220 außerhalb der vertraulichen Umgebung 210. Alle Kerne 220 werden von dem Controller 230 angesteuert. Die hier gezeigten vertraulichen Kerne 222 weisen jeweils einen eigenen Trust Anchor 240 auf, um ihre Identität nachweisen zu können.

Eine externe Recheneinheit 510 (Data Processing Unit) eines Lizenzgebers oder Rechteinhaber eines Programms 500 stellt das Programm 500 zur Verfügung und überträgt es an den Computer 400, auf dem es in einer vertraulichen Umgebung 210 ausgeführt werden soll. Das Programm 500 ist bevorzugt ein Modell 502 oder Kl-Modell 504, wie etwa ein LLM (Large Language Model), oder ein Kernel 506. Das Programm 500 ist mit einem kryptografischen Schlüssel 530 verschlüsselt und wird als verschlüsseltes Programm 500 an den Computer 400 übertragen, bevorzugt über eine sichere Verbindung, drahtgebunden oder drahtlos. Das verschlüsselte Programm 500 kann in dem Computer 400 in einem hier nicht dargestellten Speicher gespeichert werden. Eine Ausführung des verschlüsselten Programms 500 in der vertraulichen Umgebung 210 ist jedoch erst möglich, wenn der Computer 400 den kryptografischen Schlüssel 530 erhält und zum Entschlüsseln nutzen kann.

Die externe Recheneinheit 510 überträgt den kryptografischen Schlüssel 530 direkt an das externe Secure-Element 300, jedoch nicht an den Computer 400 selbst.

Der kryptografische Schlüssel 530 wird bevorzugt mittels Sicherungsdaten 520 gesichert. Die Sicherungsdaten 520 können bevorzugt auf Lizenzdaten und Lizenzinformationen des Rechteinhabers des Programms 500 basieren. Die Sicherungsdaten 520 können beispielsweise eine Verschlüsselung umfassen, sodass der kryptografische Schlüssel 530 mit diesen Sicherungsdaten 520 verschlüsselt sein kann. In diesem bevorzugten Fall umfassen die Sicherungsdaten 520 den kryptografischen Schlüssel 530. Sie werden von der Recheneinheit 510 des Lizenzgebers an das externe Secure-Element 300 übertragen und liegen dort in verschlüsselter Form vor. Das externe Secure-Element 300 verfügt also über den kryptografischen Schlüssel 530 und stellt diesen bei Bedarf der Prozessoreinheit 200 für eine Entschlüsselung des verschlüsselten Programms 500 zur Verfügung. Die Übertragung des kryptografischen Schlüssels 530 an die Prozessoreinheit 200, bevorzugt an die vertrauliche Umgebung 210 oder bevorzugt an einen oder mehrere der vertraulichen Kerne 222 erfolgt bevorzugt nach Überprüfung einer möglichen Lizenz für den Computer 400, bevorzugt via einer gesicherten Verbindung.

In einer bevorzugten Ausführungsform entschlüsselt das Secure-Element 300 den kryptografischen Schlüssel 530 aus den Sicherungsdaten 520, da der kryptografische Schlüssel 530 bevorzugt nur in dieser Form und eingebettet in die Sicherungsdaten 520 vorliegt. Das Secure-Element 300 verschlüsselt den kryptografischen Schlüssel 530 mit einem öffentlichen Verschlüsselungsschlüssel der Prozessoreinheit 200 oder bevorzugt des Trust Anchors 240. Der so entstehende verschlüsselte kryptografische Schlüssel 540 wird dann an die Prozessoreinheit 200, die vertrauliche Umgebung 210 oder bevorzugt den vertraulichen Kern 222 übertragen, um hier mit einem privaten Verschlüsselungsschlüssel, der mit dem öffentlichen Verschlüsselungsschlüssel ein Schlüsselpaar bildet, entschlüsselt zu werden. Auf diese Weise wird eine sichere Übertragung des kryptografischen Schlüssels 530 in Form des verschlüsselte kryptografische Schlüssels 540 von dem Secure-Element 300 an die Prozessoreinheit 200 gewährleistet. Der öffentliche Verschlüsselungsschlüssel wird bevorzugt von der Prozessoreinheit 200, der vertraulichen Umgebung 210 oder besonders bevorzugt von dem vertraulichen Kern 222 zur Verfügung gestellt und über eine bevorzugt sichere Verbindung an das Secure-Element 300 übertragen.

Bevorzugt kann für die Überprüfung einer Lizenz auf Schlüsselmaterial zurückgegriffen werden, dass auch den kryptografischen Schlüssel 530 umfassen kann.

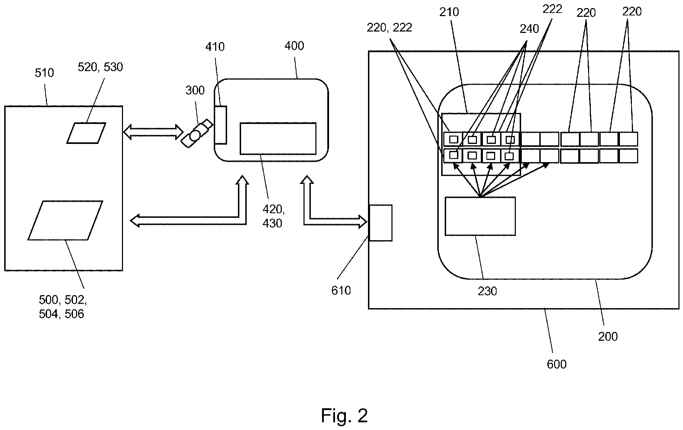

Figur 2 zeigt ein System 100 mit einem Computer 400 und einem externen Secure-Element 300 sowie mit einem Server 600, der eine Prozessoreinheit 200 mit einer vertraulichen Umgebung 210 aufweist. In der hier gezeigten Ausführungsform erfolgt eine sichere und vertrauliche Ausführung eines verschlüsselten Programms 500 in der vertraulichen Umgebung 210 der Prozessoreinheit 200 des Servers 600, wobei der für die Entschlüsselung des verschlüsselten Programms 500 benötigte kryptographische Schlüssel 530 in dem externen Secure-Element 300 umfasst ist.

Der kryptographische Schlüssel 530 wird von der Recheneinheit 510 eines Lizenzgebers an das externe Secure-Element 300 übertragen, bevorzugt in verschlüsselter Form und/oder über eine sichere Verbindung. Das Secure-Element 300 ist via der Schnittstelle 410 des Computers 400 an diesen verbindbar.

Die Recheneinheit 510 des Lizenzgebers übermittelt das verschlüsselte Programm 500 an den Computer 400. Es kann dort in einem Speicher 430 gespeichert werden. Von hier aus kann das verschlüsselte Programm 500 an den Server 600 übertragen werden, um in dessen Prozessoreinheit 200 vertraulich ausgeführt zu werden. Dabei wird die hohe Performance und Leistungsfähigkeit des Servers 600 genutzt. Dennoch soll dem Server nicht vertraut werden müssen, sodass lediglich das verschlüsselte Programm 500 von dem Computer 400 an den Server 600 übertragen wird. Dies erfolgt bevorzugt über eine gesicherte Verbindung mittels einer Schnittstelle 610, die durchaus eine drahtlose Schnittstelle sein kann, sodass eine drahtlose Verbindung zwischen Computer 400 und Server 600 realisiert sein kann. Der Server 600 kann in der Cloud lokalisiert sein.

Um das verschlüsselte Programm 500 auf dem Server 600 in seiner vertraulichen Umgebung 210 auf einem vertraulichen Kern 222 auszuführen, wird das verschlüsselte Programm von dem Computer 400, beispielsweise aus dem Speicher 430 oder mit einem Prozessor 420, an den Server 600 übertragen. Vor Ausführung des Programms 500 muss dieses entschlüsselt werden. Dazu wird der auf dem externen Secure-Element 300 gespeicherte kryptographische Schlüssel 530 über die Schnittstelle 410 des Computers 400 an den Server 600 übertragen. Der Server 600 kann in seinem vertraulichen Kern 222 das verschlüsselte Programm 500 mittels des kryptographischen Schlüssels 530 entschlüsseln und ausführen. Somit erfolgt die Ausführung des Programms 500 in der vertraulichen Umgebung 210. Da die vertrauliche Umgebung 210 mehrere vertrauliche Kerne 222 umfasst, ist es möglich eine Parallelisierung der Verarbeitung des Programms 500 durchzuführen und einzelne Teile des Programms 500 oder Kernel 506 auf die vertraulichen Kerne 222 zu verteilen.

Die Übertragung des kryptographischen Schlüssels 530 kann bevorzugt auch hier in Form des verschlüsselten kryptographischen Schlüssels 540 erfolgen, wie oben beschrieben.

In der hier gezeigten Ausführungsform umfassen die vertraulichen Kerne 222 jeweils einen Trust Anchor 240. In dem Trust Anchor 240 kann beispielsweise ein Verschlüsselungsschlüsselpaar mit einem öffentlichen Verschlüsselungsschlüssel und einem privaten Verschlüsselungsschlüssel gespeichert sein. Dieses Verschlüsselungsschlüsselpaar kann für eine sichere Übertragung des kryptographischen Schlüssels 530 von dem externen Secure-Element 300 oder an dem Computer 400, an dem das externe Secure-Element 300 angeschlossen ist an den Server 600 genutzt werden.

In der bevorzugten Ausführungsform kann der Trust Anchor 240 oder die Prozessoreinheit 200 des Servers dazu ausgebildet sein, eine einmalige Nummer, Nonce, zu erstellen und an das externe Secure-Element 300 zu übertragen.

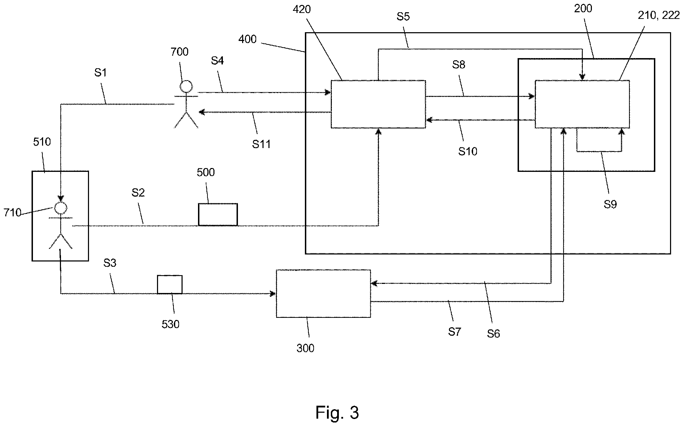

Figur 3 zeigt schematisch den Ablauf des Verfahrens zum Schutz eines Programms 500 und zu dessen Ausführung in einer vertraulichen Umgebung 210.

In einem ersten Schritt S1 erfragt ein Lizenznehmer 700 eine Lizenz für ein Programm 500 bei einem Lizenzgeber 710. Der Lizenzgeber 710 sendet in einem zweiten Schritt S2 von seiner Recheneinheit 510 das gewünschte verschlüsselte Programm 500 an den Computer 400 des Lizenznehmers. Ein Schritt S3 umfasst das Versenden einer Lizenz und Sicherungsdaten 520 und/oder Schlüsselmaterial, das den kryptografischen Schlüssel 530 für die Entschlüsselung des verschlüsselten Programms 500 umfasst, an das externe Secure-Element 300.

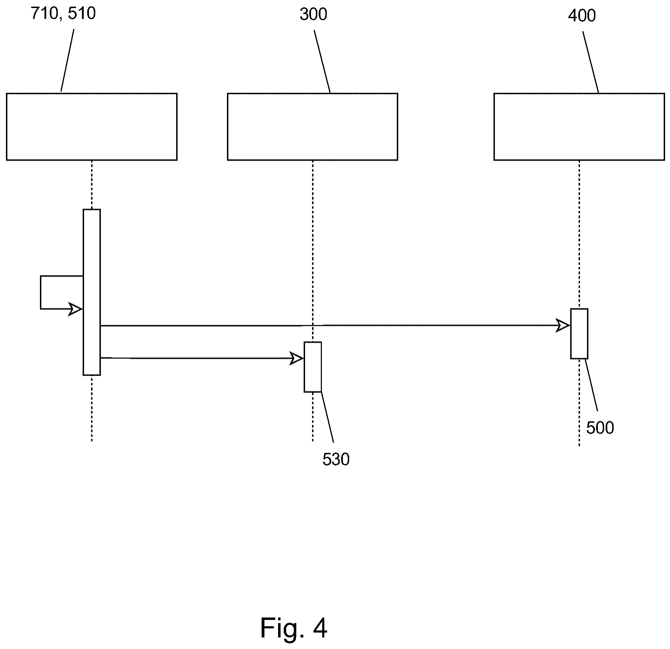

Durch diese vorbereitenden Schritte, die nochmals in Figur 4 gezeigt sind, wird der Lizenznehmer 700 in die Lage versetzt, das verschlüsselte Programm 500 in einer vertraulichen Umgebung 210 einer Prozessoreinheit 200 auszuführen.

Eine solche Ausführung wird durch eine Anfrage nach einer Nutzung des Programms 500 oder KI-Modells 504 durch den Lizenznehmer 700 im Schritt S4 initiiert. Der Computer 400 sendet in einem Schritt S5 die Bereitstellung einer vertraulichen Umgebung 210 an die Prozessoreinheit 200, um in einem vertraulichen Kern 222 eine Ausführung des Programms 500 bzw. des KI-Modells 504 zu ermöglichen. Gleichzeitig wird die Bereitstellung eines Verschlüsselungsschlüssels von dem vertraulichen Kern 222 oder bevorzugt dem Trust Anchor 240 des vertraulichen Kerns 222 angefordert.

Der vertrauliche Kern 222 sendet bevorzugt eine Anfrage für eine Lizenzüberprüfung an das externe Secure-Element 300 in einem Schritt S6. Dabei können bevorzugt auch Informationen aus dem Trust Anchor 240 an das externe Secure-Element 300 übermittelt werden. Das externe Secure-Element 300 kann die vertrauliche Umgebung 210 anhand der Informationen aus dem Trust Anchor 240 verifizieren. Dies kann Grundlage dafür sein, dass der kryptographische Schlüssel 530 an den vertraulichen Kern 222 übermittelt wird. Bevorzugt wird auch der öffentliche Verschlüsselungsschlüssel des vertraulichen Kerns 222 übertragen.

Da dem externen Secure-Element 300 nun der öffentliche Verschlüsselungsschlüssel des vertraulichen Kerns 222 vorliegt, kann hierauf basierend eine sichere Verbindung zwischen dem externen Secure-Element 300 und dem vertraulichen Kern 222 in der vertraulichen Umgebung 210 hergestellt werden. Bevorzugt ist der verwendete Verschlüsselungsschlüssel ein zertifizierter Schlüssel. Nach der Überprüfung der Lizenzinformationen und dem Feststellen einer gültigen Lizenz in dem externen Secure-Element 300 überträgt das externe Secure-Element 300 den kryptographischen Schlüssel 530 in einem Schritt 7 an den vertraulichen Kern 222 mit dem Trust Anchor 240. Bevorzugt wird vorher der kryptographischen Schlüssel 530 mit dem öffentlichen Verschlüsselungsschlüssel verschlüsselt. Dies kann bevorzugt beispielsweise analog zu dem oben beschriebenen Ablauf erfolgen.

Für die Übertragung des kryptographischen Schlüssels 530 von dem Secure-Element 300 an die vertrauliche Umgebung 210 wird der kryptographische Schlüssel 530 mit dem öffentlichen Verschlüsselungsschlüssel des Trust Anchors 240 oder des vertraulichen Kerns 222 verschlüsselt. Eine Entschlüsselung des kryptographischen Schlüssels 530 vor dessen Verwendung ist durch den vertraulichen Kern 222 möglich, da ihm der private Verschlüsselungsschlüssel zur Verfügung steht. Auf diese Weise kann der kryptographische Schlüssel 530 sicher von dem externen Secure-Element 300 an den vertraulichen Kern 222 übertragen werden.

In einem weiteren Schritt S8 wird das verschlüsselte Programm 500 oder das verschlüsselte KI-Modell 504 in die Prozessoreinheit 200, bevorzugt in die vertrauliche Umgebung 210 geladen, um in dem vertraulichen Kern 222 verarbeitet zu werden.

In einem Schritt S9 entschlüsselt der vertrauliche Kern 222 das verschlüsselte KI-Modell 504 oder Programm 500 mittels des kryptographischen Schlüssels 530 und führt das Programm 500 oder das KI-Modell 504 aus. Die Ausführung erfolgt also in der vertraulichen Umgebung 210 in einem vertraulichen Kern 222 und somit unabhängig und ohne die Möglichkeit des Zugriffs durch Dritte. Da die Verifizierung der vertraulichen Umgebung 210 in der Prozessoreinheit 200 auf Daten des Trust Anchors 240 und/oder des kryptographischen Schlüssels 530 sowie Lizenzinformationen innerhalb des externen Secure-Elements 300 beruht, ist der Nachweis der Vertraulichkeit der Prozessoreinheit 200 unabhängig von anderen Quellen oder Autorisierungseinheiten.

In einem Schritt S10 wird das Ergebnis der Ausführung des Programms 500 oder des Kl-Modells 504 aus der Prozessoreinheit 200 an den Computer 400 oder einen Speicherbereich des Computers 400 übertragen. Somit steht in einem Schritt S11 das Ergebnis der Berechnung auch dem Lizenznehmer 700 zur Verfügung, der die Berechnung angestoßen hatte.

Das hier beschriebene Verfahren kann auch mit einem externen Server ablaufen, der in einer vertraulichen Umgebung 210 die Ausführung des geschützten Programms 500 durchführt. Das Secure-Element 300 ist dabei an den Computer 400 angeschlossen. Die Kommunikation zwischen Secure-Element 300 und der vertraulichen Umgebung 210 erfolgt dann via den Computer 400, der auch das geschützte bzw. verschlüsselte Programm 500 an den Server 600 überträgt.

Figur 4 zeigt ein weiteres Ablaufdiagramm der vorbereitenden Schritte für eine vertrauliche Ausführung eines geschützten Programms 500 in einer vertraulichen Umgebung 210. Von einem Lizenzgeber 700 wird mit seiner Recheneinheit 510 ein Programm 500 oder ein Kl-Modell 504 bereitgestellt und mit einem kryptographischen Schlüssel 530 verschlüsselt. Das Programm 500 wird an einen Computer 400 übermittelt und kann dort gespeichert werden, beispielsweise in einer nichtflüchtigen Speichereinheit. Ebenso übermittelt der Lizenzgeber 710 von seiner Recheneinheit 510 den verwendeten kryptographischen Schlüssel 530 an ein externes Secure-Element 300, in dem der kryptographische Schlüssel 530 gespeichert werden kann. Der kryptographische Schlüssel 530 kann beispielsweise ein symmetrischer Schlüssel sein. Auf dem externen Secure-Element 300 kann das Schlüsselmaterial einschließlich des kryptographischen Schlüssels sowie die Lizenz für einen Endnutzer gespeichert werden. Der kryptographische Schlüssel kann verschlüsselt sein und bevorzugt in dem Schlüsselmaterial umfasst sein.

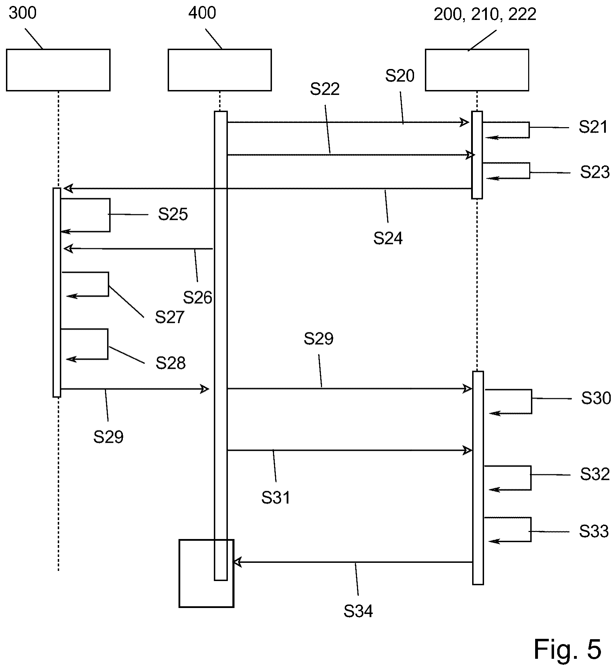

Figur 5 zeigt die einzelnen Schritte und den Ablauf der Verarbeitungsphase, nachdem eine Lizenz erteilt wird. Hierbei wird gezeigt, wie die einzelnen Komponenten, also das externe Secure-Element 300 und der Computer 400 sowie die Verarbeitungseinheit 200 mit ihrer vertraulichen Umgebung 210 und dem vertraulichen Kern 222 zusammenarbeiten.

Sobald eine Anforderung zur Ausführung eines geschützten Programms von einem Lizenznehmer an dem Computer 400 initiiert wird, wird in Schritt S20 die Prozessoreinheit 200 aufgefordert, eine vertrauliche Umgebung 210 aufzubauen oder zur Verfügung zu stellen. Der vertrauliche Kern der Prozessoreinheit kann die vertrauliche Umgebung aufbauen, die anhand seiner Informationen in dem zugehörigen Trust Anchor verifiziert wird. Dies ist durch den Schritt S21 gekennzeichnet.

Ein Schritt S22 stellt die Anforderung des Computers 400 an die Verarbeitungseinheit dar, in der eine Schlüsselvereinbarung zwischen dem vertraulichen Kern und dem externen Secure-Element 300 angefordert wird. Der vertrauliche Kern wählt in dem Schritt S23 eine Nonce aus und sendet diese in Schritt S24 gemeinsam mit einem zertifizierten öffentlichen Verschlüsselungsschlüssel an das externe Secure-Element 300. Der Verschlüsselungsschlüssel ist durch den Trust Anchor des vertraulichen Kerns zertifiziert.

Schritt S25 repräsentiert die Validierung der Nonce und des zertifizierten öffentlichen Verschlüsselungsschlüssels des vertraulichen Kerns in dem externen Secure-Element 300. Die Validierung erfolgt anhand eines vertrauenswürdigen Stammzertifikats, das in dem externen Secure-Element 300 vorhanden sein kann und beispielsweise von einer Trusted Authority bereitgestellt wurde. In Schritt S26 werden Lizenzinformationen des geschützten Programms, KI-Modells oder Kernels von dem Computer 400 an das externe Secure-Element 300 übermittelt.

Bevorzugt liegt der kryptografische Schlüssel nicht in lesbarer Form in dem externen Secure-Element 300 vor, sondern nur in verschlüsselter Form, beispielsweise eingebettet in Sicherungsdaten 520. Mit Hilfe von Schlüsselmaterial oder bevorzugt den Lizenzinformationen wird der kryptografische Schlüssel aus den Sicherungsdaten extrahiert. Wenn das externe Secure-Element 300 nicht über den kryptografischen Schlüssel verfügt, kann dieser alternativ in verschlüsselter Form auf dem Computer 400 gespeichert sein und wird nun in Schritt S26 ebenfalls mit an das externe Secure-Element übertragen.

Schritt S27 zeigt, dass der verschlüsselte kryptografische Schlüssel anhand von Sicherungsdaten, Schlüsselmaterial oder anderen Lizenzinformationen entschlüsselt werden kann und steht nun für weitere Operationen unverschlüsselt zur Verfügung. In Schritt S28 wird der kryptografische Schlüssel mit dem öffentlichen Verschlüsselungsschlüssel des vertraulichen Kerns und bevorzugt der übermittelten Nonce verschlüsselt, um in Schritt S29 über den Computer 400 an die Prozessoreinheit 200 übermittelt zu werden. Eine Entschlüsselung des kryptografischen Schlüssels mit dem privaten Verschlüsselungsschlüssel des vertraulichen Kerns erfolgt in Schritt S30. Der kryptografische Schlüssel wurde somit sicher und unbeeinflussbar von dem geschützten externen Secure-Element 300 an die vertrauliche Umgebung der Prozessoreinheit 200 übertragen.

In Schritt S31 wird das verschlüsselte Programm bzw. das verschlüsselte KI-Modell an den vertraulichen Kern 222 übertragen und hier bereitgestellt. Das verschlüsselte Programm bzw. das verschlüsselte Kl-Modell wird in Schritt S32 mit dem kryptografischen Schlüssel entschlüsselt. In Schritt S33 erfolgt die Ausführung des Programms oder KI-Modells wie gewohnt innerhalb der vertraulichen Umgebung 210 mit dem vertraulichen Kern 222.

Das Ergebnis der Ausführung des Programms oder KI-Modells wird in Schritt S34 an den Computer 400 oder eine Speichereinheit oder einen Speicherbereich innerhalb des Computers übermittelt. Die Übermittlung kann unverschlüsselt erfolgen, da die Ergebnisse der Berechnung des Programms oder des KI-Modells frei zugänglich sein sollen.

Der Ablauf des beschriebenen Verfahrens kann auch in gleicher Weise durchgeführt werden, wenn die Prozessoreinheit 200 statt in dem Computer 400 beispielsweise in einem Server vorhanden ist und das Programm auf dem Server ausgeführt wird. In diesem Fall wird ebenfalls eine sichere Übertragung des für die Entschlüsselung benötigten kryptografischen Schlüssels an die vertrauliche Umgebung und den vertraulichen Kern gewährleistet. Die Übertragung erfolgt ebenfalls von einem externen Secure-Element, das an einem Computer angeschlossen ist.

Ein praktischer Anwendungsfall des erfindungsgemäßen Verfahrens sieht vor, dass ein Anbieter ein proprietäres Kl-Modell erstellt, das nicht nur in einer öffentlichen Cloud, sondern auch vor Ort bei einem Kunden gehostet werden soll. Das KI-Modell soll für Lizenzzwecke oder zu anderen Zwecken lizenziert werden.

Das Verfahren kann auch mit anderen vertraulichen Kernen, insbesondere GPU-Kernen eingesetzt werden. Bei GPU-beschleunigten Anwendungsfällen können zum Beispiel die Eigentümer das Modell so lizenzieren oder schützen. Beispielsweise können wissenschaftliche oder physikalische Berechnungen in einer öffentlichen Cloud sicher durchgeführt werden, deren Inhalt vertraulich bleiben muss. Beispiele sind etwa industrielle Simulationen, Windkanäle, Strömungsdynamiken, Klima- oder Wettervorhersagen. Weitere derartige Anwendungsfälle sind eine Videoverarbeitung, ein Rendering, eine 3D-Modellierung oder ein Raytracing.

In der Forschung oder in medizinischen Anwendungen könnte das Verfahren verwendet werden, um die Entwicklung neuer Molekülstrukturen ebenso zu schützen wie Genomsequenzierungen oder Protein-Faltungs-Simulationen.

Ein möglicher Anwendungsfall betrifft den Schutz von Retrieval Augmented Generation Systems (RAG), bei denen zum Beispiel Unternehmensdaten, rechtliche oder medizinische Unterlagen während der Ausführung auf einem vertraulichen Kern zu einer Anfrage eines Kl-Modells oder eines LLM-Modells hinzugefügt werden.

Das Verfahren bietet auch Schutz bei der Verwendung eines lizenzierten KI-Modells in einer öffentlichen Cloud, wobei sich das externe Secure-Element nicht in der Cloud befindet, sondern beim End-User des Modells bzw. KI-Modells bzw. an dessen Computer. Der End-User entscheidet nach der Lizenzierung dynamisch, welcher öffentliche Cloud-Anbieter für die Ausführung des Modells verwendet werden soll. Dies schafft Flexibilität und kann beispielsweise eine schnellere Ausführung umfassen.

Das Verfahren eignet sich auch bei maßgeschneiderten GPU-Kerneln, die lokal bereitgestellt werden und vor einem Reverse Engineering geschützt werden sollen. Die Kernel für optimierte GPU-Prozessoren und vertrauliche GPU-Kernel können verschlüsselt und geschützt an die entsprechenden Kerne übermittelt werden und sind so vor dem Zugriff dritter sicher.

Die zunehmende Verbreitung von Technologien auf Basis künstlicher Intelligenz und KI-Modellen führt zu einer verstärkten Verarbeitung vertraulicher Daten mit proprietären Algorithmen und Kerneln. Diese Daten werden sowohl in öffentlichen Clouds als auch in privaten Instanzen oder Unternehmensrechnern verarbeitet. Die Erfindung ermöglicht eine von dem Verarbeitungsort unabhängige Verwaltung von Lizenzen und stellt außerdem Schlüsselmaterial für die Verschlüsselung sensibler Daten bereit. Auf diese Weise wird eine nahtlose Lizenzverwaltung und Bereitstellung von Verschlüsselungsschlüsseln unabhängig von dem Verarbeitungsort ermöglicht, wodurch die Mobilität zwischen Geräten gewährleistet und die Abhängigkeit von der Cloud-Infrastruktur (keine Internetabhängigkeit aufgrund von Vorortvertrauen) oder von bestimmten Geräten aufgrund der flexiblen von den vertraulichen Kern- und der Prozessoreinheit unabhängigen Lizenzverwaltung, beseitigt wird. Das erfindungsgemäße Verfahren und System integrieren bestehende kryptographische Primitive wie vertrauliche Umgebungen oder ein "Confidential Computing" und nutzen Vorort-Vertrauensanker, also Trusted Anchors, um Schlüsselmaterial für die Verschlüsselung sensibler Daten bereitzustellen. Kryptographische Schlüssel können nicht nur in dem externen Secure-Element, sondern auch in den Kl-Modellen oder Programmen gespeichert werden. Hierbei ist es möglich, die Lizenz unabhängig von der Berechnung und Bereitstellung von Schlüsselmaterial für die Verschlüsselung sensibler Informationen zu verwalten. Dadurch kann der Ort der Berechnung dynamisch auf der Grundlage der Anforderungen an Leistung und Vertraulichkeit ausgewählt werden. Diese Funktionen ermöglichen neue maßgeschneiderte Geschäftsmodelle, um Informationen zu schützen.

### DEFINITIONEN

Der Begriff "Nonce" bezeichnet eine Zahl oder einen Wert, der nur einmal verwendet wird, um die Sicherheit kryptographischer Protokolle zu erhöhen. Ein Nonce kann in Kommunikationsprotokollen zwischen dem Trust Anchor und dem externen Secure-Element verwendet werden, um Replay-Angriffe zu verhindern, bei denen ein Angreifer eine zuvor abgefangene Nachricht erneut sendet. Das System kann konfiguriert sein, um Protokolle mit oder ohne Nonce zu verwenden, wodurch Flexibilität bei der Implementierung verschiedener Sicherheitsanforderungen geboten wird. Ein Beispiel für die Verwendung eines Nonce ist die Einbindung einer eindeutigen Zufallszahl in jede Authentifizierungsanfrage zwischen dem externen Secure-Element und dem Trusted Execution Core, wodurch sichergestellt wird, dass jede Kommunikationssitzung eindeutig identifizierbar ist und nicht wiederholt werden kann.

Unter dem Begriff "Trust Anchor" wird ein hardwarebasierter Vertrauensanker verstanden, der in die PU oder GPU eingebettet ist und als manipulationssichere Wurzel des Vertrauens fungiert. Ein "Trust Anchor" (TA) ist eine unveränderliche hardwarebasierte Information, eine Vertrauensbasis, die in das Silizium des Kerns des Prozessors oder der Prozessoreinheit PU, z.B. in einen "Trusted Execution Core, TEC", hier als vertraulicher Kern bezeichnet, eingebettet ist.

Ein "Trusted Execution Core" (TEC), auch vertraulicher Kern oder vertrauliche Umgebung genannt, bezeichnet ein Verarbeitungselement (CPU-/GPU-Kern oder anderer Verarbeitungsbeschleuniger), das in einer vertraulichen, in der Regel sicheren, isolierten Umgebung innerhalb einer Prozessoreinheit oder eines Computersystems ausgeführt wird, das für die Ausführung sensibler Codes (wie proprietäre Kl-Modelle oder Kernel) ausgelegt ist.

Der Trusted Execution Core kann zur sicheren Ausführung proprietärer Kl-Modelle innerhalb einer vertraulichen Ausführungsumgebung konfiguriert sein. Der Trusted Execution Core kann mit einem externen Secure-Element über vorab geteilte kryptographische Schlüssel authentifizieren, Lizenzbedingungen verifizieren und das Modell zur Ausführung in einer isolierten, manipulationsresistenten Umgebung entschlüsseln, wenn eine Autorisierung vorliegt.

Derzeit werden zum Schutz von (KI-)Modellen für Zentralprozessoren (CPU) und Grafikprozessoren (GPU) vertrauenswürdige Umgebungen oder Ausführungsumgebungen (TEE, https://en.wikipedia.org/wiki/Trusted_execution_environment) verwendet und "Confidential Computing" (https://en.wikipedia.org/wiki/Confidential computing) eingesetzt, was von verschiedenen Hardware-Anbietern unterstützt wird. Der Schwerpunkt dieses Ansatzes liegt auf dem Schutz der Vertraulichkeit von Daten von Endnutzern im Kontext öffentlicher Rechenzentren oder öffentlicher Cloud-Computing-Dienste, obwohl er auch in privaten Rechenzentren und Computern eingesetzt werden kann. Dadurch wird sichergestellt, dass der Code und die Daten im Kern vertraulich bleiben und ihre Integrität geschützt ist, selbst wenn das umgebende Betriebssystem oder die Laufzeitumgebung kompromittiert wird.

Im Gegensatz dazu basiert der Schutz sensibler Codes durch Verschleierung auf einer softwarebasierten Verschlüsselung von Codes/Daten.

Der Begriff "Kernel" bezeichnet den Kernteil eines Programms oder Modells. Im Kontext von Grafikprozessoren kann ein Kernel ein kleines Programm sein, das auf der GPU läuft und eine spezifische Aufgabe ausführt, wie beispielsweise Matrixmultiplikation oder Faltung. Der Kernel kann ein proprietärer GPU-Kernel sein, der Teil des Kl-Modells ist und vor unbefugter Nutzung geschützt werden soll. Ein Kernel kann ein maschinennahes Programm, Modul oder Programmteil sein, die hochperformant und/oder effizient ausführbar sind. Der Kernel ist bevorzugt entsprechend kompiliert, so dass er von der Prozessoreinheit oder einer CPU oder GPU ausgeführt werden kann.

Der Begriff "Modell" bezeichnet ein proprietäres Softwareelement oder Programm, das für spezifische Aufgaben verwendet wird und eine Software darstellt, die einem Rechteinhaber gehört und vor unbefugter Nutzung oder Kopieren geschützt werden muss. Das Modell kann verschlüsselt übertragen und nur innerhalb der vertrauenswürdigen Ausführungsumgebung der PU entschlüsselt werden. Das Modell kann ein "KI-Modell" sein und ein proprietäres Modell künstlicher Intelligenz, wie beispielsweise ein Deep-Learning-Modell oder LLM-Model umfassen, das für bestimmte Aufgaben wie Bilderkennung, Verarbeitung natürlicher Sprache oder wissenschaftliche Simulationen verwendet wird.

Der Begriff "Secure-Element" oder "externes Secure-Element" bezeichnet ein manipulationssicheres Hardware-Gerät oder -Modul, das physisch von der GPU getrennt ist und zur sicheren Speicherung kryptographischer Schlüssel und zur Durchsetzung von Lizenzbedingungen ausgelegt ist. Das Secure-Element kann als unabhängige, externe vertrauenswürdige Autorität fungieren und über nichtflüchtigen Speicher verfügen. Das Secure-Element kann lokal vor Ort oder remote in der Cloud angeordnet sein und kann (zertifizierte) kryptographische Schlüssel verwalten, Lizenzberechtigungen vor der Entschlüsselung validieren und einen sicheren Kanal mit dem Trust Anchor der GPU etablieren.

Unter dem Begriff "GPU" wird eine Grafikprozessoreinheit verstanden, die parallele Verarbeitungsfähigkeiten bietet und eine effiziente Ausführung von Kl-Modellen ermöglicht, einschließlich Deep-Learning-Netzwerken, Bilderkennungssystemen und Anwendungen zur Verarbeitung natürlicher Sprache. Die GPU kann eine vertrauliche (Computing-)Umgebung bereitstellen und einen Trust Anchor enthalten, der für die sichere Ausführung proprietärer Modelle und Kernel konfiguriert ist.

Die Erfindung wurde anhand der Zeichnungen und der Beschreibung umfassend beschrieben und erklärt. Die Beschreibung und Erklärung sind als Beispiel und nicht einschränkend zu verstehen. Die Erfindung ist nicht auf die offenbarten Ausführungsformen beschränkt. Andere Ausführungsformen oder Variationen ergeben sich für den Fachmann bei der Verwendung der vorliegenden Erfindung sowie bei einer genauen Analyse der Zeichnungen, der Offenbarung und der nachfolgenden Patentansprüche.

In den Patentansprüchen schließen die Wörter "umfassen" und "mit" nicht das Vorhandensein weiterer Elemente oder Schritte aus. Der undefinierte Artikel "ein" oder "eine" schließt nicht das Vorhandensein einer Mehrzahl aus. Ein einzelnes Element oder eine einzelne Einheit kann die Funktionen mehrerer der in den Patentansprüchen genannten Einheiten ausführen. Ein Element, eine Einheit, eine Vorrichtung und ein System können teilweise oder vollständig in Hard- und/oder in Software umgesetzt sein. Die bloße Nennung einiger Maßnahmen in mehreren verschiedenen abhängigen Patentansprüchen ist nicht dahingehend zu verstehen, dass eine Kombination dieser Maßnahmen nicht ebenfalls vorteilhaft verwendet werden kann. Bezugszeichen in den Patentansprüchen sind nicht einschränkend zu verstehen.

### Bezugszeichenliste

- 100: System;
- 200: Prozessoreinheit;
- 210: Vertrauliche Umgebung;
- 220: Kern;
- 222: Vertraulicher Kern;
- 230: Controller;
- 240: Trust Anchor;
- 300: externes secure Element;
- 400: Computer;
- 410: Schnittstelle;
- 420: Prozessor;
- 430: Speicher
- 500: Programm;
- 502: Modell;
- 504: Kl-Modell;
- 506: Kernel;
- 510: Recheneinheit;
- 520: Sicherungsdaten;
- 530: Kryptografischer Schlüssel;
- 540: Verschlüsselter kryptografischer Schlüssel
- 600: Server;
- 610: Schnittstelle;
- 700: Lizenznehmer;
- 710: Lizenzgeber

## Patentansprüche

1. Verfahren zum Schutz eines Programms (500) durch vertrauliche Ausführung des Programms (500) in einer vertraulichen Umgebung (210) einer Prozessoreinheit (200) eines Computers (400) oder Servers (600), umfassend die folgenden Schritte:
- Bereitstellen einer Prozessoreinheit (200) mit einer vertraulichen Umgebung (210) und mit wenigstens einem vertraulichen Kern (222), der ein sicherer Kern (220) in der vertraulichen Umgebung (210) ist;
- Bereitstellen eines verschlüsselten Programms (500), das in der vertraulichen Umgebung (210) ausgeführt werden soll;
- Bereitstellen eines externen Secure-Elements (300), das mit dem Computer (400) verbindbar ist und das einen kryptographischen Schlüssel (530) zur Entschlüsselung des verschlüsselten Programms (500) umfasst;
- Verbinden des externen Secure-Elements (300) mit dem Computer (400);
- Übertragung des kryptographischen Schlüssels (530) von dem externen Secure-Element (300) an die Prozessoreinheit (200);
- Entschlüsselung des verschlüsselten Programms (500) unter Verwendung des kryptographischen Schlüssels (530);
- Ausführung des entschlüsselten Programms (500) innerhalb der vertraulichen Umgebung (210) der Prozessoreinheit (200).

2. Verfahren nach Anspruch 1, wobei das Programm (500) ein Modell (502), ein Kl-Modell (504) oder einen Kernel (506) umfasst.

3. Verfahren nach Anspruch 1 oder 2, wobei die Übertragung zwischen dem externen Secure-Element (500) und der Prozessoreinheit (200) auf einer sicheren Verbindung beruht und der Aufbau der sicheren Verbindung auf Verschlüsselungsschlüsseln basiert, vorzugsweise auf zertifizierten Schlüsseln, besonders bevorzugt auf Schlüsseln, die in der Prozessoreinheit (200) und auf dem externen Secure-Element (300) bereitgestellt sind, bevorzugt in dem vertraulichen Kern (222).

4. Verfahren nach einem der vorhergehenden Ansprüche, **gekennzeichnet durch** die folgenden Schritte:
- Verschlüsseln des kryptographischen Schlüssels (530) mit einem öffentlichen Verschlüsselungsschlüssel der Prozessoreinheit (200), bevorzugt des vertraulichen Kerns (222), in einen übertragbaren verschlüsselten kryptographischen Schlüssel (540) vor der Übertragung an die Prozessoreinheit (200);
- Entschlüsseln des übertragenen verschlüsselten kryptographischen Schlüssels (540) mit einem privaten Verschlüsselungsschlüssel, der mit dem öffentlichen Verschlüsselungsschlüssel ein Schüsselpaar bildet, um den kryptographischen Schlüssel (530) zur Entschlüsselung des verschlüsselten Programms (500) zu verwenden, wobei das Entschlüsseln bevorzugt in der Prozessoreinheit (200), besonders bevorzugt in der vertraulichen Umgebung (210), sehr bevorzugt in dem vertraulichen Kern (222) erfolgt.

5. Verfahren nach einem der vorhergehenden Ansprüche, **gekennzeichnet durch** den weiteren Schritt:
- vertrauliche Übertragung des verschlüsselten Programms (500), eines verschlüsselten Modells (502) oder Kernels (506) oder anderer Daten an den vertraulichen Kern (222) der Prozessoreinheit (200), bevorzugt von einer Instanz oder einem Rechner eines Rechteinhabers oder Lizenzgebers des Programms.

6. Verfahren nach einem der vorhergehenden Ansprüche, **gekennzeichnet durch** die Schritte:
- Sichern des kryptographischen Schlüssels (530) mittels Sicherungsdaten (520);
- Übermitteln des gesicherten kryptographischen Schlüssels (530) an das externe Secure-Element (300);
- Zurverfügungstellen der Sicherungsdaten (520) an das externe Secure-Element (300);
- Entsichern des gesicherten kryptographischen Schlüssels (530) durch das externe Secure-Element (300) bei Bedarf;
wobei die Sicherungsdaten (520) bevorzugt auf Lizenzdaten oder Lizenzinformationen von einem Rechteinhaber des Programms basieren.

7. Verfahren nach einem der vorhergehenden Ansprüche, wobei die Übertragung des kryptographischen Schlüssels (530) an den vertraulichen Kern (222) nach einer Lizenzprüfung erfolgt, vorzugsweise einer Lizenzprüfung durch das externe Secure-Element (300).

8. Verfahren nach einem der vorhergehenden Ansprüche, wobei Schlüsselmaterial für die Verschlüsselung und Entschlüsselung von Benutzerdaten, Lizenzen, Lizenzdaten und/oder andere Daten für eine Lizenzprüfung, durch das externe Secure-Element (300) bereitgestellt werden kann, wobei bevorzugt das Schlüsselmaterial den kryptographischen Schlüssel (530) umfasst.

9. Verfahren nach einem der vorhergehenden Ansprüche, wobei die Lizenzierung des Programms (500), Modells (502) und/oder Kernels (506) und/oder der Schutz unabhängig von zentralen Strukturen und unabhängig von der Ausführung in einer lokalen Umgebung oder in einer öffentlichen Cloud und/oder unabhängig von öffentlicher Infrastruktur erfolgt, so dass auch eine Offline-Ausführung möglich ist.

10. Verfahren nach einem der vorhergehenden Ansprüche, **dadurch gekennzeichnet, dass**
die Prozessoreinheit (200) Teil eines Servers (600) ist, bevorzugt eines Servers (600) in der Cloud,
das externe Secure-Element (300) mit dem Computer (400) verbunden ist;
der Computer (400) das verschlüsselte Programm (500) an den Server (600) übermittelt;
und
der Computer (400) die Ausführung des Programms (500) in dem vertraulichen Kern (222) der Prozessoreinheit (200) des Servers (600) initiiert,
wobei bevorzugt eine sichere Verbindung zwischen dem externen Secure-Element (300) und/oder Computer (400) und Server (600) existiert oder hergestellt wird.

11. Verfahren nach einem der vorhergehenden Ansprüche, wobei ein Protokoll zur Kommunikation zwischen dem externen Secure-Element (600) und dem vertraulichen Kern (222) mit oder ohne Nonce verwendet wird.

12. Verfahren nach einem der vorhergehenden Ansprüche, umfassend die weiteren Schritte:
Initiieren des Entschlüsselungsprozesses des Programms (500), Modells (502) oder Kernels (506), bevorzugt durch den Nutzer des Computers (400);
Zurverfügungstellen eines Verschlüsselungsschlüsselpaares mit öffentlichem Verschlüsselungsschlüssel und privatem Verschlüsselungsschlüssel, bevorzugt in dem vertraulichen Kern (222) oder einem Trust Anchor (240) in dem vertraulichen Kern (222);
Anfordern des öffentlichen Verschlüsselungsschlüssels der Prozessoreinheit (200), bevorzugt eines zertifizierten öffentlichen Verschlüsselungsschlüssels, besonders bevorzugt eines von einem Trust Anchor (240) zertifizierten öffentlichen Verschlüsselungsschlüssels;
Optionales Erstellen eines Nonce;
Übermitteln des öffentlichen Verschlüsselungsschlüssels und der optionalen Nonce von der Prozessoreinheit (200) an das externe Secure-Element (300);
Validieren der optionalen Nonce und des öffentlichen Verschlüsselungsschlüssels, bevorzugt gegen ein vertrauenswürdiges Stammzertifikat, bevorzugt in dem externen Secure-Element (300);
Verschlüsseln des kryptographischen Schlüssels (530) mit dem öffentlichen Verschlüsselungsschlüssel;
Übermitteln des verschlüsselten kryptographischen Schlüssels (530) und optional weiterer Lizenzinformationen vom externen Secure-Element (300) an die Prozessoreinheit (200);
Empfangen und Entschlüsseln des verschlüsselten kryptographischen Schlüssels (530) in der Prozessoreinheit (200), bevorzugt im vertraulichen Kern (222) der Prozessoreinheit (200), besonders bevorzugt in einem Trust Anchor (240) der Prozessoreinheit (200), mit dem privaten Verschlüsselungsschlüssels des öffentlichen Verschlüsselungsschlüssels.

13. Verfahren nach dem vorhergehenden Anspruch, **gekennzeichnet durch** die weiteren Schritte:
Zurverfügungstellen des kryptographischen Schlüssels (530) an das externe Secure-Element (300);
Optionales Zurverfügungstellen von Lizenzformationen des Programms (500), des Modells (502) und/oder des Kernels (506).

14. System (100) zum Schutz eines Programms (500) mit dem Ziel der vertraulichen Ausführung des Programms (500) in einer vertraulichen Umgebung einer Prozessoreinheit (200), umfassend:
- die Prozessoreinheit (200) mit einer vertraulichen Umgebung (210) und mit wenigstens einem vertraulichen Kern (222), der ein Kern (220) in der vertraulichen Umgebung (210) ist;
- ein externes Secure-Element (300), das mit einem Computer (400) verbindbar ist;
- wobei das System (100) konfiguriert ist zum:
- Aufbau einer sicheren Verbindung zwischen dem Computer (400) und/oder dem externen Secure-Element (300) und der Prozessoreinheit (200);
- vertraulichen Übertragen eines Programms (500), eines Modells (502) oder Kernels (506) oder anderer Daten an den vertraulichen Kern (222) unter Verwendung der sicheren Verbindung;
- Übertragen eines kryptographischen Schlüssels (530) an den vertraulichen Kern (222) von dem externen Secure-Element (300);
- Entschlüsselung des Programms (500), eines Modells (502) oder Kernels (506) unter Verwendung des kryptographischen Schlüssels (530) in dem vertraulichen Kern (222);
- Ausführung des entschlüsselten Programms (500), Modells (502) oder Kernels (506) innerhalb der vertraulichen Umgebung (210) der Prozessoreinheit (200).

15. System (100) nach Anspruch 13, wobei die Prozessoreinheit (200) einen Trust Anchor (240) umfasst, der ein hardwarebasierter Vertrauensanker ist, der in die Prozessoreinheit (200) bei der Herstellung der Prozessoreinheit (200) eingebettet ist, bevorzugt in den vertraulichen Kern (222) der Prozessoreinheit (200).

16. System (100) nach Anspruch 13 oder 14, wobei das externe Secure-Element (300) ein manipulationssicheres Hardware-Gerät oder -Modul ist, das physisch von der Prozessoreinheit (200) getrennt ist und zur sicheren Speicherung kryptographischer Schlüssel (530) und bevorzugt zur Durchsetzung von Lizenzbedingungen ausgelegt ist.

17. System (100) nach einem der Ansprüche 13 bis 15, wobei das externe Secure-Element (300) lokal mit einem Computer (400) verbunden ist, während die Ausführung des Programms (500), eine Lizenzierung und/oder ein Schutz des Programms (500) in einer Prozessoreinheit (200) eines externen Servers (600) und/oder in einer öffentlichen Cloud durchgeführt werden.

18. Externes Secure-Element (300) zur Speicherung eines kryptografischen Schlüssels (530), für ein System (100) nach einem der Ansprüche 13 bis 16, **dadurch gekennzeichnet, dass** des externen Secure-Elements (300) dazu ausgebildet ist, den kryptografischen Schlüssel (530) mit einem empfangenen Verschlüsselungsschlüssel zu verschlüsseln.

19. Prozessoreinheit (200) mit einer vertraulichen Umgebung (210) und mit wenigstens einem vertraulichen Kern (222), der einen Kern (220) in der vertraulichen Umgebung (210) umfasst, wobei der vertrauliche Kern (222) oder die vertrauliche Umgebung (210) einen Trust Anchor (240) umfasst, der bei der Herstellung der Prozessoreinheit (200) in den vertraulichen Kern (222) oder die Umgebung (210) eingebettet wird und unveränderbar ist und zur Identifizierung oder Authentifizierung des vertraulichen Kerns (222) oder der Umgebung (210) dient.

20. Prozessoreinheit (200) nach dem vorhergehenden Anspruch, **dadurch gekennzeichnet, dass** der vertrauliche Kern (222) oder die vertrauliche Umgebung (210) oder der eingebettete Trust Anchor (240) proprietäre Programme (500), Modelle (502), Kernel (506) und/oder kryptografische Schlüssel (530) umfasst, die durch den Hersteller der Prozessoreinheit (200) vorgeladen sind, wodurch der Hersteller Lizenzbedingungen für die Programme (500), Modelle (502), Kernel (506) und/oder kryptografische Schlüssel (530) direkt kontrollieren kann.
